# EUROPEAN PATENT APPLICATION

(11) **EP 3 517 735 A1**
(43) Date of publication of application: **31.07.2019**
(21) Application number: 19153986.5
(22) Date of filing: 28.01.2019
(51) Int. Cl.: F01D 9/04

(54) **STATOR VANE ASSEMBLY FOR A GAS TURBINE ENGINE**

(30) Priority: 30.01.2018 US 201815883959
(71) Applicant: United Technologies Corporation, Farmington, CT 06032 (US)
(72) Inventor: AMADON, Colin G., Kennebunk, ME Maine 04043 (US); HUNNEWELL, Nicholas, North Berwick, ME Maine 03906 (US)
(74) Representative: Dehns

(57) **Abstract**

A stator vane arrangement (201; 301) may comprise a first shroud (210, 220; 310, 320) comprising a first side surface (332) and a second side surface (334), a slot (314) disposed in the first shroud (210, 220; 310, 320), the slot (314) at least partially defined by the first side surface (332) and the second side surface (334), a stator vane (205; 305) extending at least partially through the slot (314), wherein the first side surface (332) and the second side surface (334) are disposed on opposite sides of the slot (314), and the first side surface (332) is oriented at a first non-zero angle (Φ₂) with respect to a radial direction.

## Description

### FIELD

The present disclosure relates to gas turbine engines, and more specifically, to vane arrangements for stator vanes for gas turbine engines.

### BACKGROUND

Gas turbine engines typically include at least a compressor section to pressurize inflowing air, a combustor section to burn a fuel in the presence of the pressurized air, and a turbine section to extract energy from the resulting combustion gases. One or more sections of the gas turbine engine may include a plurality of vane assemblies having vanes interspersed between rotor assemblies that carry the blades of successive stages of the section.

Vanes with bow or lean intersect a shroud at an angle that causes there to be a disproportionate amount of rubber on the suction and pressure side of the vane. This uneven rubber distribution makes the peak rubber strain location local to its location of pinch. In addition, a larger portion of the flow path surface is comprised of filled rubber.

### SUMMARY

In various embodiments, a shroud for a stator vane is disclosed, comprising a first side surface, a second side surface, and a slot disposed in the shroud, the slot at least partially defined by the first side surface and the second side surface, wherein the first side surface and the second side surface are disposed on opposite sides of the slot, and the first side surface is oriented at a first non-zero angle with respect to a radial direction.

In various embodiments, the second side surface is oriented at a second non-zero angle with respect to the radial direction.

In various embodiments, the first non-zero angle and the second non-zero angle are equal.

In various embodiments, the slot is configured to receive a stator vane.

In various embodiments, the slot extends between a distal surface and a proximal surface of the shroud.

A stator vane arrangement is disclosed, comprising a first shroud comprising a first side surface and a second side surface, a slot disposed in the first shroud, the slot at least partially defined by the first side surface and the second side surface, a stator vane extending at least partially through the slot, wherein the first side surface and the second side surface are disposed on opposite sides of the slot, wherein the first side surface is oriented at a first non-zero angle with respect to a radial direction.

In various embodiments, the second side surface is oriented at a second non-zero angle with respect to the radial direction.

In various embodiments, the first non-zero angle and the second non-zero angle are equal.

In various embodiments, an outer surface of a portion of the stator vane that is disposed within the slot is substantially parallel with at least one of the first side surface and the second side surface.

In various embodiments, the stator vane arrangement further comprises a rubber potting disposed in the slot between the stator vane and the first shroud.

In various embodiments, the stator vane arrangement further comprises a second shroud, wherein the stator vane extends from the second shroud.

In various embodiments, the first shroud is disposed opposite the stator vane from the second shroud.

In various embodiments, a gap between the stator vane and the first shroud is substantially uniform along the radial direction.

A gas turbine engine is disclosed, comprising a stator vane arrangement in a compressor section, the stator vane arrangement comprising a first shroud comprising a first side surface and a second side surface, a slot disposed in the first shroud, the slot at least partially defined by the first side surface and the second side surface, and a stator vane extending at least partially through the slot, wherein the first side surface and the second side surface are disposed on opposite sides of the slot, and the first side surface is oriented at a first non-zero angle with respect to a radial direction.

In various embodiments, the second side surface is oriented at a second non-zero angle with respect to the radial direction.

In various embodiments, the first non-zero angle and the second non-zero angle are equal.

In various embodiments, an outer surface of a portion of the stator vane that is disposed within the slot is substantially parallel with at least one of the first side surface and the second side surface.

In various embodiments, the gas turbine engine further comprises a rubber potting disposed in the slot between the stator vane and the first shroud.

In various embodiments, the gas turbine engine further comprises a second shroud, wherein the stator vane extends from the second shroud.

In various embodiments, the first shroud is disposed opposite the stator vane from the second shroud.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates a cross-section view of a gas turbine engine, in accordance with various embodiments;
FIG. 2 illustrates a cross-section view of a low pressure compressor section of a gas turbine engine comprising a stator vane extending between a first shroud and a second shroud, in accordance with various embodiments;
FIG. 3A illustrates a perspective view of a stator vane arrangement having stator vanes oriented at a non-zero angle relative to the radial direction, in accordance with various embodiments;
FIG. 3B illustrates a cross-section axial view of the stator vane arrangement of FIG. 3A, in accordance with various embodiments; and
FIG. 3C illustrates an enlarged view of the stator vane coupled to the shroud of FIG. 3B, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein. Thus, the detailed description herein is presented for purposes of illustration only and not of limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

As used herein, "distal" refers to the direction radially outward, or generally, away from the axis of rotation of a turbine engine. As used herein, "proximal" refers to a direction radially inward, or generally, towards the axis of rotation of a turbine engine. As used herein, "aft" refers to the direction associated with a tail (e.g., the back end) of an aircraft, or generally, to the direction of exhaust of a gas turbine engine. As used herein, "forward" refers to the direction associated with a nose (e.g., the front end) of the aircraft, or generally, to the direction of flight or motion.

Vanes with bow or lean intersect a shroud at an angle that causes there to be a disproportionate amount of rubber on the suction and pressure side of the vane. This uneven rubber distribution makes the peak rubber strain location local to its location of pinch. In addition, a larger portion of the flow path surface is comprised of filled rubber.

A stator vane arrangement, as disclosed herein, may have a uniform thickness of potting material which may tend to minimize exposure of the potting material to the flow path around the stator vane and reduce peak strain of the potting material.

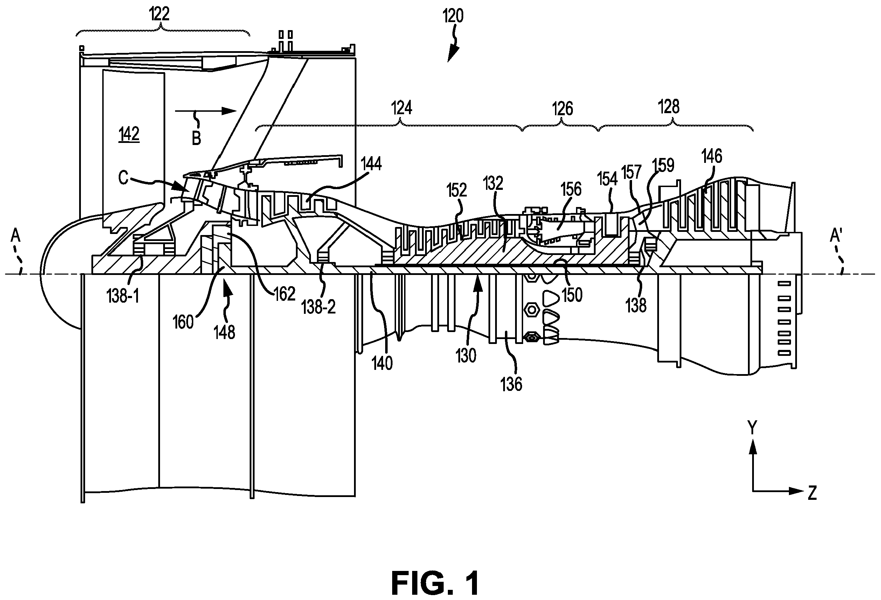

In various embodiments, and with reference to FIG. 1, a gas turbine engine 120 is disclosed. Gas turbine engine 120 may comprise a two-spool turbofan that generally incorporates a fan section 122, a compressor section 124, a combustor section 126, and a turbine section 128. Gas turbine engine 120 may also comprise, for example, an augmenter section, and/or any other suitable system, section, or feature. In operation, fan section 122 may drive air along a bypass flow-path B, while compressor section 124 may further drive air along a core flow-path C for compression and communication into combustor section 126, before expansion through turbine section 128. FIG. 1 provides a general understanding of the sections in a gas turbine engine, and is not intended to limit the disclosure. The present disclosure may extend to all types of applications and to all types of turbine engines, including, for example, turbojets, turboshafts, and three spool (plus fan) turbofans wherein an intermediate spool includes an intermediate pressure compressor ("IPC") between a low pressure compressor ("LPC") and a high pressure compressor ("HPC"), and an intermediate pressure turbine ("IPT") between the high pressure turbine ("HPT") and the low pressure turbine ("LPT").

In various embodiments, gas turbine engine 120 may comprise a low speed spool 130 and a high speed spool 132 mounted for rotation about an engine central longitudinal axis A-A' relative to an engine static structure 136 via one or more bearing systems 138 (shown as, for example, bearing system 138-1 and bearing system 138-2 in FIG. 1). It should be understood that various bearing systems 138 at various locations may alternatively or additionally be provided, including, for example, bearing system 138, bearing system 138-1, and/or bearing system 138-2.

In various embodiments, low speed spool 130 may comprise an inner shaft 140 that interconnects a fan 142, a low pressure (or a first) compressor section 144, and a low pressure (or a second) turbine section 146. Inner shaft 140 may be connected to fan 142 through a geared architecture 148 that can drive fan 142 at a lower speed than low speed spool 130. Geared architecture 148 may comprise a gear assembly 160 enclosed within a gear housing 162. Gear assembly 160 may couple inner shaft 140 to a rotating fan structure. High speed spool 132 may comprise an outer shaft 150 that interconnects a high pressure compressor ("HPC") 152 (e.g., a second compressor section) and high pressure (or a first) turbine section 154. A combustor 156 may be located between HPC 152 and high pressure turbine 154. A mid-turbine frame 157 of engine static structure 136 may be located generally between high pressure turbine 154 and low pressure turbine 146. Mid-turbine frame 157 may support one or more bearing systems 138 in turbine section 128. Inner shaft 140 and outer shaft 150 may be concentric and may rotate via bearing systems 138 about engine central longitudinal axis A-A'. As used herein, a "high pressure" compressor and/or turbine may experience a higher pressure than a corresponding "low pressure" compressor and/or turbine.

In various embodiments, the air along core airflow C may be compressed by low pressure compressor 144 and HPC 152, mixed and burned with fuel in combustor 156, and expanded over high pressure turbine 154 and low pressure turbine 146. Mid-turbine frame 157 may comprise airfoils 159 located in core airflow path C. Low pressure turbine 146 and high pressure turbine 154 may rotationally drive low speed spool 130 and high speed spool 132, respectively, in response to the expansion.

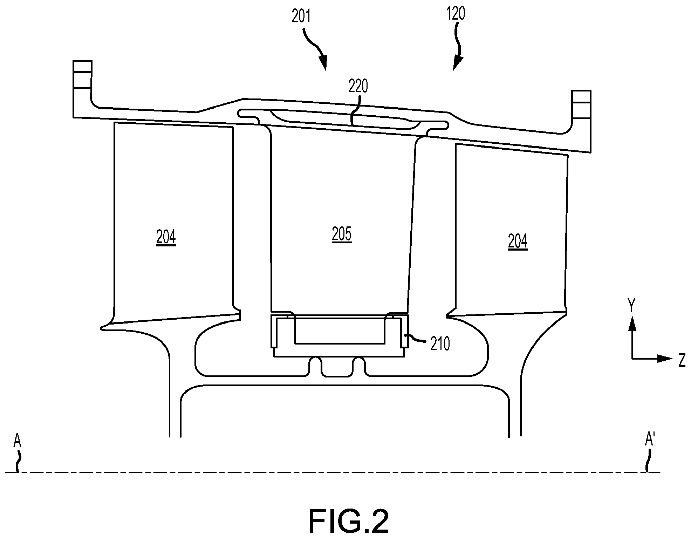

In various embodiments, and with reference to FIG. 2, a section of low pressure compressor 144 of FIG. 1 is depicted in greater detail. Low pressure compressor 144 may comprise a stator vane arrangement 201. Stator vane arrangement 201 may comprise a stator vane 205 configured to direct airflow through low pressure compressor 144. Stator vane 205 may be coupled at a first end to inner diameter (ID) shroud (shroud) 210 and at a second end to outer diameter (OD) shroud (shroud) 220. Shroud 210 may be radially spaced apart from shroud 220. Stator vane 205 may be located axially between rotor vanes 204. Rotor vanes 204 may rotate with respect to stator vane 205 about engine central longitudinal axis A-A'. In various embodiments, shroud 220 may form a portion of an outer core engine structure, and shroud 210 may form a portion of an inner core engine structure to at least partially define an annular core gas flow path through low pressure compressor 144. In various embodiments, stator vane arrangement 201 may comprise multiple components wherein shroud 210 and shroud 220 are coupled to stator vane 205 to form stator vane arrangement 201. In various embodiments, stator vane arrangement 201 may comprise a single component wherein stator vane 205, shroud 210, and shroud 220 may also comprise a single casting. In various embodiments, stator vane arrangement 201 may comprise a single component wherein stator vane 205 and shroud 210 may also comprise a single casting. In various embodiments, stator vane arrangement 201 may comprise a single component wherein stator vane 205 and shroud 220 may also comprise a single casting. In various embodiments, stator vane 205, shroud 210, and/or shroud 220 may be comprised of a metal, including, but not limited to, nickel, chromium, aluminum, titanium, and steel. In various embodiments, stator vane 205, shroud 210, and/or shroud 220 may be comprised of a carbon composite material.

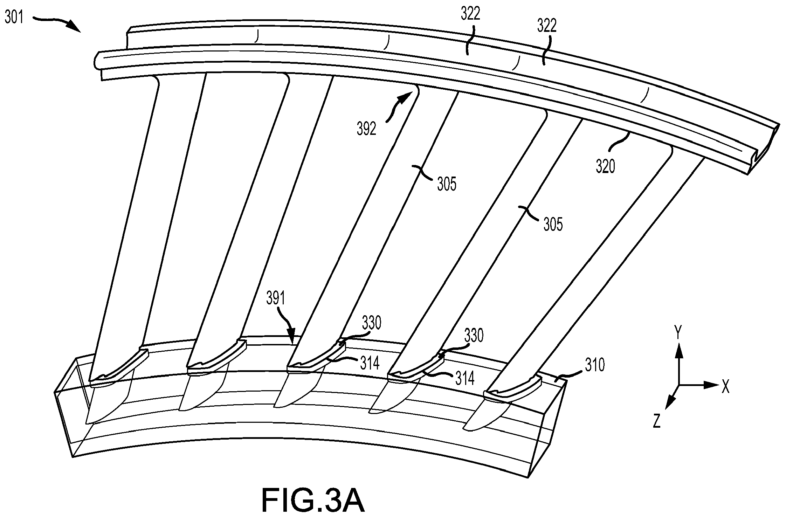

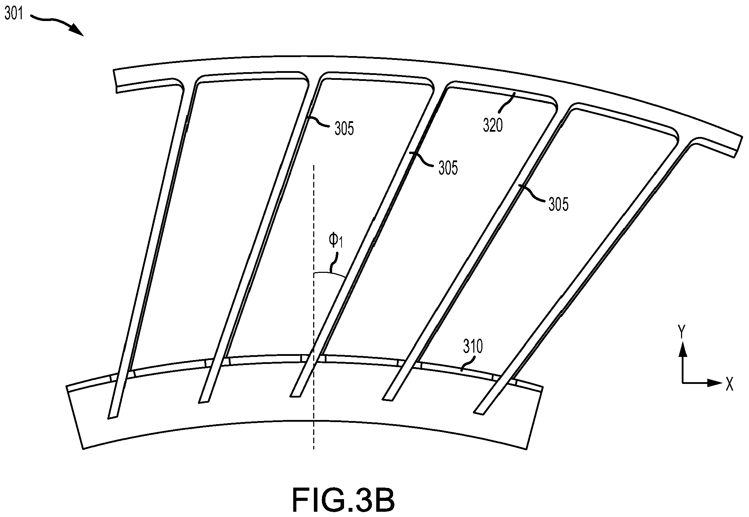

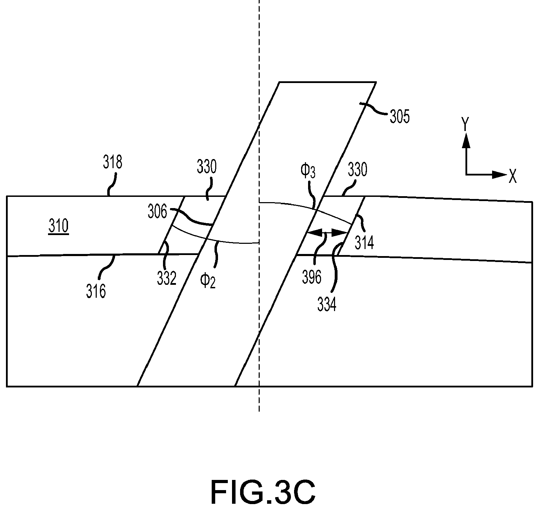

With reference to FIG. 3, a stator vane arrangement 301 is illustrated, in accordance with various embodiments. In various embodiments, stator vane arrangement 301 may be similar to stator vane arrangement 201 of FIG. 2. Stator vane arrangement 301 may include a shroud 310, a shroud 320, and a plurality of stator vanes 305. A second end 392 of each stator vane 305 may be coupled to shroud 320. In various embodiments, shroud 320 may comprise a segmented shroud, wherein shroud 320 is formed of a plurality of segments 322. Each segment 322 may be radially aligned with a different stator vane 305. Stated differently, each segment 322 may correspond to a different stator vane. Although illustrated as each stator vane 305 being coupled to its own respective segment 322, it is contemplated that each segment 322 may correspond to two or more stator vanes 305. Furthermore, it is contemplated that shroud 320 may comprise a continuous shroud.

In various embodiments, shroud 310 may comprise a plurality of slots 314. Each slot 314 may be configured to receive a corresponding stator vane 305. A first end 391 of each stator vane 305 may extend at least partially through a corresponding slot 314 of shroud 310. Each slot 314 may comprise a high aspect ratio slot, for example having an aspect ratio of two or greater. A potting material 330 may fill the gap between shroud 310 and stator vane 305. Stated differently, potting material 330 may be disposed in slot 314 between shroud 310 and stator vane 305. Potting material 330 may mitigate movement of stator vane 305 relative to shroud 310. Potting material 330 may reduce leakage of air through slot 314. Potting material 330 may be comprised of an elastomer, including, but not limited to natural rubber, synthetic rubber, silicone, etc.

In various embodiments, although illustrated as being disposed in shroud 310, it is contemplated that slots 314 may be similarly disposed in shroud 320. In this regard, the methods of attaching a stator vane 305 to a shroud 310 may be similarly applied to shroud 320. In this regard, shroud 310 and shroud 320 may be referred to herein interchangeably as a first shroud and/or a second shroud.

With respect to FIG. 3B and FIG. 3C, elements with like element numbering, as depicted in FIG. 3A, are intended to be the same and will not necessarily be repeated for the sake of clarity.

With reference to FIG. 3B, each stator vane 305 may be oriented at a non-zero angle (Φ₁) with respect to the radial direction. With additional reference to FIG. 3C, shroud 310 may comprise a first side surface 332 and a second side surface 334. First side surface 332 and second side surface 334 may at least partially define slot 314. First side surface 332 and second side surface 334 may be disposed on opposite sides of slot 314. First side surface 332 may be oriented at a non-zero angle (also referred to herein as a first non-zero angle) (Φ₂) with respect to the radial direction. Second side surface 334 may be oriented at a non-zero angle (also referred to herein as a second non-zero angle) (Φ₃) with respect to the radial direction. In various embodiments, non-zero angle (Φ₂) and non-zero angle (Φ₃) may be equal. Stated differently, first side surface 332 and second side surface 334 maybe parallel.

Slot 314 may extend between distal surface 318 and proximal surface 316 of shroud 310. Because first side surface 332 and second side surface 334 are oriented at a non-zero angle with respect to the radial direction, a uniform gap 396, along the radial direction, may exist between stator vane 305 and shroud 310. In this regard, outer surface 306 of a portion of the stator vane 305 that is disposed within slot 314 may be substantially parallel with first side surface 332 and/or second side surface 334.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims and their legal equivalents, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A shroud for a stator vane, comprising:
a first side surface;
a second side surface; and
a slot disposed in the shroud, the slot at least partially defined by the first side surface and the second side surface;
wherein the first side surface and the second side surface are disposed on opposite sides of the slot, and
the first side surface is oriented at a first non-zero angle with respect to a radial direction.

2. The shroud of claim 1, wherein the second side surface is oriented at a second non-zero angle with respect to the radial direction.

3. The shroud of claim 2, wherein the first non-zero angle and the second non-zero angle are equal.

4. The shroud of claim 1, 2 or 3, wherein the slot is configured to receive a stator vane.

5. The shroud of any preceding claim, wherein the slot extends between a distal surface and a proximal surface of the shroud.

6. A stator vane arrangement, comprising:
a first shroud comprising a shroud as claimed in any preceding claim; and
a stator vane extending at least partially through the slot.

7. The stator vane arrangement of claim 6, wherein an outer surface of a portion of the stator vane that is disposed within the slot is substantially parallel with at least one of the first side surface and the second side surface.

8. The stator vane arrangement of claim 6 or 7, further comprising a rubber potting disposed in the slot between the stator vane and the first shroud.

9. The stator vane arrangement of claim 6, 7 or 8, further comprising a second shroud, wherein the stator vane extends from the second shroud.

10. The stator vane arrangement of claim 9, wherein the first shroud is disposed opposite the stator vane from the second shroud.

11. The stator vane arrangement of any of claims 6 to 10, wherein a gap between the stator vane and the first shroud is substantially uniform along the radial direction.

12. A gas turbine engine, comprising:
a stator vane arrangement as claimed in any of claims 6 to 11, in a compressor section.
